# EUROPEAN PATENT APPLICATION

(11) **EP 4 622 081 A1**
(43) Date of publication of application: **24.09.2025**
(21) Application number: 23891229.9
(22) Date of filing: 11.10.2023
(51) Int. Cl.: H02M 3/28, H02M 7/00

(54) **POWER SUPPLY DEVICE**

(30) Priority: 16.11.2022 JP 2022183575
(71) Applicant: Astemo, Ltd., Chiyoda-ku, Tokyo 1000004 (JP)
(72) Inventor: KURIMOTO, Yoshinori, Tokyo 100-8280 (JP); SHIMADA, Takae, Tokyo 100-8280 (JP); MIYAZAKI, Hideki, Hitachinaka-shi, Ibaraki 312-8503 (JP); YASUKAWA, Yoshihito, Hitachinaka-shi, Ibaraki 312-8503 (JP)
(74) Representative: Strehl & Partner mbB
(86) International application number: PCT/JP2023/036926
(87) International publication number: WO 2024/106071

(57) **Abstract**

A power supply device includes: a resonance type DC-DC converter that performs voltage conversion between a first DC voltage and a second DC voltage; and a control circuit that controls the DC-DC converter, the DC-DC converter has a switching circuit and a resonance circuit, in a case where the second DC voltage is higher than a predetermined first threshold and the second DC voltage is lower than a predetermined second threshold that is larger than the first threshold, the control circuit controls the DC-DC converter in a resonance frequency mode in which a switching frequency of the switching circuit is maintained close to a resonance frequency of the resonance circuit, and in a case where the second DC voltage is lower than the first threshold or the second DC voltage is higher than the second threshold, the control circuit controls the DC-DC converter in a frequency modulation mode in which the switching frequency is changed with a change in the second DC voltage.

## Description

### Technical Field

The present invention relates to a power supply device.

### Background Art

On-vehicle chargers with high power output capable of charging in a short time have been developed along with the recent trend toward electrification of automobiles. The voltage of a lithium ion battery that is a storage battery of an EV greatly varies depending on the state of charge, and it is desired to reduce the loss in a wide output range. In these charging devices, DC-DC converters capable of converting DC power having different voltages are widely used. In addition, as measures for a power outage caused by disaster and power smoothing, attention has also been paid to a viewpoint of treating a storage battery of an EV as an energy source at home, a building facility, or the like, and demand for devices that bidirectionally convert power has also increased. In this case, the DC-DC converter is required to be capable of bidirectionally converting power.

Regarding the bidirectional DC-DC converter, for example, the technology of PTL 1 is known. PTL 1 discloses a technology in which, in a resonance type DC-DC converter using a resonance phenomenon of an LC resonance circuit, when power is supplied from one DC voltage supply to the other DC voltage supply, a bridge circuit on one DC voltage supply side is subjected to pulse frequency modulation control at a frequency equal to or lower than a resonance frequency of the resonance circuit, and when power is supplied in an opposite direction, a bridge circuit on the other DC voltage supply side is subjected to fixed frequency control.

### Citation List

### Patent Literature

PTL 1: WO 2015/004989 A

### Summary of Invention

### Technical Problem

In the resonance type DC-DC converter described in PTL 1, it is difficult to achieve both a wide input/output voltage range and loss reduction.

### Solution to Problem

A power supply device according to the present invention includes: a resonance type DC-DC converter that performs voltage conversion between a first DC voltage and a second DC voltage; and a control circuit that controls the DC-DC converter, the DC-DC converter has a switching circuit and a resonance circuit, in a case where the second DC voltage is higher than a predetermined first threshold and the second DC voltage is lower than a predetermined second threshold that is larger than the first threshold, the control circuit controls the DC-DC converter in a resonance frequency mode in which a switching frequency of the switching circuit is maintained close to a resonance frequency of the resonance circuit, and in a case where the second DC voltage is lower than the first threshold or the second DC voltage is higher than the second threshold, the control circuit controls the DC-DC converter in a frequency modulation mode in which the switching frequency is changed with a change in the second DC voltage.

### Advantageous Effects of Invention

According to the present invention, it is possible to realize a power supply device capable of achieving both a wide input/output voltage range and loss reduction.

### Brief Description of Drawings

[FIG. 1] FIG. 1 is a diagram showing a configuration of a power supply device according to a first embodiment of the present invention.
[FIG. 2] FIG. 2 is a diagram showing an operation of the power supply device according to the first embodiment of the present invention.
[FIG. 3] FIG. 3 is a diagram illustrating an effect of phase shift control.
[FIG. 4] FIG. 4 is a diagram showing a configuration of a power supply device according to a second embodiment of the present invention.
[FIG. 5] FIG. 5 is a diagram showing an operation of the power supply device according to the second embodiment of the present invention.
[FIG. 6] FIG. 6 is a diagram showing a configuration of a power supply device according to a third embodiment of the present invention.

### Description of Embodiments

### - First Embodiment -

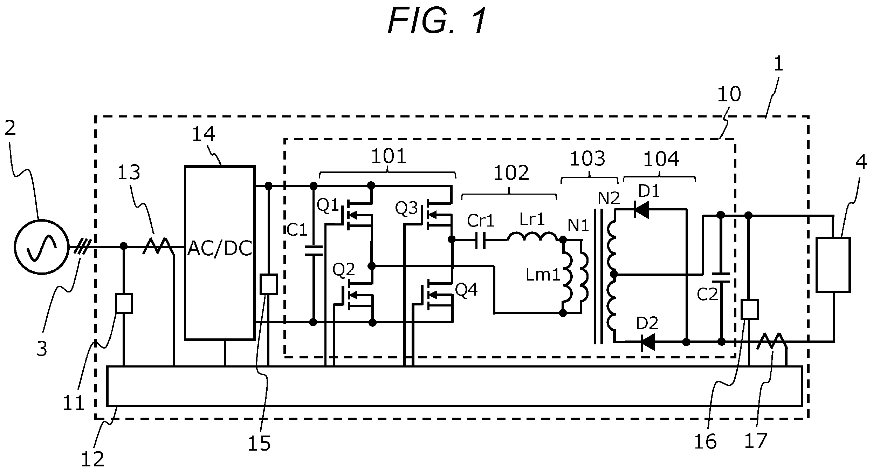

FIG. 1 is a diagram showing a configuration of a power supply device according to a first embodiment of the present invention. A power supply device 1 shown in FIG. 1 receives AC power supplied from an AC power supply 2 via a power supply line 3, generates DC power, and outputs the generated DC power to a load 4 to supply the DC power supply to the load 4. The AC power supplied from the AC power supply 2 may be either single-phase or three-phase, and the magnitude of the voltage is not limited.

The power supply device 1 includes a resonance type DC-DC converter 10, a voltage sensor 11, a control circuit 12, a current sensor 13, an AC-DC converter 14, a voltage sensor 15, a voltage sensor 16, and a current sensor 17. As the load 4 receiving the supply of the DC power supply from the power supply device 1, a secondary battery such as a lithium ion battery or a lead storage battery, an inverter circuit that converts DC power to AC power, or the like is conceivable.

The AC-DC converter 14 converts an AC voltage input from the AC power supply 2 to a DC voltage, and outputs the converted DC voltage to the DC-DC converter 10. The magnitudes of the AC voltage and the AC current input from the AC power supply 2 to the AC-DC converter 14 are detected by the voltage sensor 11 and the current sensor 13, respectively, and sensor signals corresponding to the detection results of the sensors are transmitted to the control circuit 12. The voltage sensor 15 detects the magnitude of the DC voltage output from the AC-DC converter 14, and transmits a sensor signal corresponding to the detection result to the control circuit 12.

The DC-DC converter 10 converts the DC voltage output from the AC-DC converter 14 to another DC voltage, and outputs the DC power after the voltage conversion to the load 4. The DC-DC converter 10 includes a full bridge circuit 101 that has a configuration obtained by combining a capacitor C1 with switching elements Q1 to Q4 and is operated as a switching circuit, a resonance circuit 102 formed of a resonance capacitor Cr1 and a resonance reactor Lr1, an insulation transformer 103 having a primary winding wire N1, a secondary winding wire N2, and an exciting inductance Lm1, a rectifier circuit 104 having diodes D1 and D2, and a capacitor C2.

The capacitor C1 smooths the DC voltage input to the DC-DC converter 10. The full bridge circuit 101 has two switching legs in which switching elements Q1 and Q2 are connected in series and switching elements Q3 and Q4 are connected in series, and the DC voltage input to the DC-DC converter 10 is applied to both ends of these switching legs. In this state, each of the switching elements Q1 to Q4 performs a switching operation at a predetermined timing according to the control of the control circuit 12, whereby the DC voltage is converted to the AC voltage and output to the resonance circuit 102. As the switching elements Q1 to Q4, for example, semiconductor elements such as MOSFETs and IGBTs are used.

The resonance circuit 102 is connected between the full bridge circuit 101 and the insulation transformer 103, and has a predetermined resonance frequency determined according to the capacitance value of the resonance capacitor Cr1 and the inductance value of the resonance reactor Lr1. In the power supply device 1 of the present embodiment, the efficiency of the DC-DC converter 10 is increased by using the resonance phenomenon of the resonance circuit 102.

The insulation transformer 103 subjects the AC voltage input from the full bridge circuit 101 to the primary winding wire N1 via the resonance circuit 102 to voltage conversion to another AC voltage at a voltage ratio according to a turn ratio of the primary winding wire N1 to the secondary winding wire N2, and outputs the AC voltage to the rectifier circuit 104. The center tap type rectifier circuit 104 has the diodes D1 and D2 connected to both ends of the secondary winding wire N2, respectively, generates a DC voltage by rectifying the AC voltage output to the secondary winding wire N2 side of the insulation transformer 103, and outputs the DC voltage to the load 4. The capacitor C2 smooths the DC voltage output from the rectifier circuit 104 to the load 4. Therefore, the DC voltage is output from the DC-DC converter 10 to the load 4, and the supply of the DC power supply from the power supply device 1 to the load 4 is performed.

The magnitudes of the DC voltage and the DC current output from the DC-DC converter 10 to the load 4 are detected by the voltage sensor 16 and the current sensor 17, respectively, and sensor signals corresponding to the detection results of the sensors are transmitted to the control circuit 12.

The control circuit 12 receives the sensor signals respectively transmitted from the voltage sensor 11 and the current sensor 13 provided on the AC power supply 2 side, the voltage sensor 15 provided between the AC-DC converter 14 and the DC-DC converter 10, and the voltage sensor 16 and the current sensor 17 provided on the load 4 side, thereby acquiring voltage and current detection results of these sensors. Then, the AC-DC converter 14 and the DC-DC converter 10 are controlled based on the acquired voltage and current detection results.

### - Operation of First Embodiment -

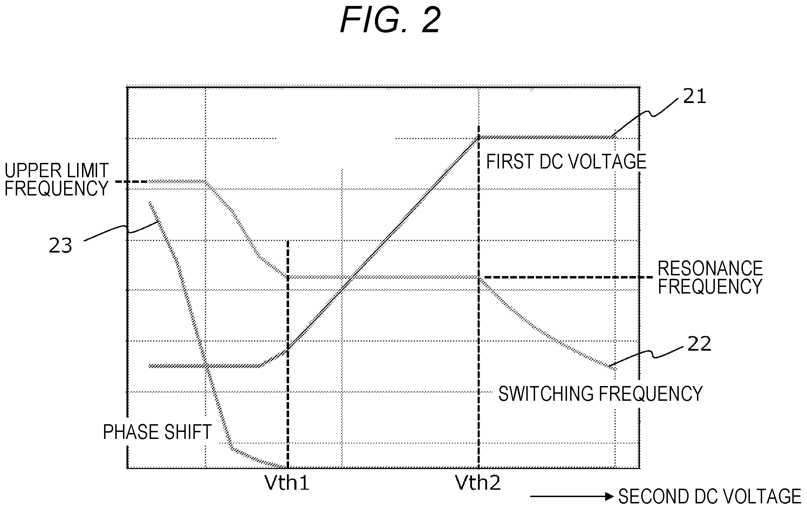

FIG. 2 is a diagram showing an operation of the power supply device according to the first embodiment of the present invention. Hereinafter, an operation example in a case where the load 4 is a secondary battery and the power supply device 1 charges the load 4 using the power of the AC power supply 2 will be described with reference to FIG. 2.

In FIG. 2, a graph 21 represents an output voltage (hereinafter, referred to as "first DC voltage") of the AC-DC converter 14, a graph 22 represents a switching frequency of the full bridge circuit 101 in the DC-DC converter 10, and a graph 23 represents a change in the phase shift amount of the full bridge circuit 101. In these graphs 21 to 23, the horizontal axis represents the magnitude of the output voltage (hereinafter, referred to as "second DC voltage") from the DC-DC converter 10 to the load 4, and the vertical axis represents the magnitude of the physical amount (first DC voltage, switching frequency, and phase shift amount) corresponding to each graph.

First, the control circuit 12 sets a function corresponding to the graph 21 as a command value for the AC-DC converter 14. This function represents a relationship between the first DC voltage and the second DC voltage, that is, how the output voltage of the AC-DC converter 14 should be set relative to the output voltage of the DC-DC converter 10 detected by the voltage sensor 16. Therefore, the control circuit 12 can control the AC-DC converter 14 according to the graph 21 based on the second DC voltage detected by the voltage sensor 16.

Then, based on the charging voltage (second DC voltage) and the charging current of the load 4 detected by the voltage sensor 16 and the current sensor 17, respectively, and the charging command value for the load 4, the control circuit 12 sets the switching frequency of the full bridge circuit 101, and controls the switching elements Q1 to Q4 according to the switching frequency. In this case, for example, any of a current command, a voltage command, and a power command can be used as the charging command value. Therefore, the control circuit 12 can control the full bridge circuit 101 according to the graph 22 based on the second DC voltage detected by the voltage sensor 16 to change the switching frequency.

The control circuit 12 compares the value of the second DC voltage detected by the voltage sensor 16 with preset thresholds Vth1 and Vth2 (Vth1<Vth2), and changes the switching frequency as shown in the graph 22 of FIG. 2 according to the comparison result. That is, in a case where the second DC voltage is higher than the threshold Vth1 and the second DC voltage is lower than the threshold Vth2, the full bridge circuit 101 in the DC-DC converter 10 is controlled so that the switching frequency is maintained close to the resonance frequency of the resonance circuit 102. Hereinafter, such a control mode is referred to as "resonance frequency mode".

Meanwhile, in a case where the second DC voltage is lower than the threshold Vth1 or the second DC voltage is higher than the threshold Vth2, the full bridge circuit 101 in the DC-DC converter 10 is controlled so that the switching frequency is changed with a change in the second DC voltage. Specifically, in a case where the second DC voltage is lower than the threshold Vth1, the full bridge circuit 101 is controlled in the DC-DC converter 10 so that the switching frequency that is higher than the resonance frequency changes toward the resonance frequency, with an increase in the second DC voltage. In addition, in a case where the second DC voltage is higher than the threshold Vth2, the full bridge circuit 101 is controlled in the DC-DC converter 10 so that the switching frequency that is lower than the resonance frequency changes away from the resonance frequency, with an increase in the second DC voltage. Hereinafter, such a control mode is referred to as "frequency modulation mode".

In the power supply device 1 of the present embodiment, by the control performed as described above, while the DC-DC converter 10 performs the voltage conversion from the first DC voltage to the second DC voltage in a wide input/output voltage range, loss reduction can be achieved using the resonance frequency mode in a possible voltage range. Therefore, it is possible to achieve both a wide input/output voltage range and loss reduction. In addition, since the frequency range of the AC voltage applied to the insulation transformer 103 can be narrowed, the insulation transformer 103 can be downsized.

In a case where the switching frequency of the full bridge circuit 101 is higher than the resonance frequency, that is, in a case where the second DC voltage is lower than the threshold Vth1, the control circuit 12 performs the phase shift control on the full bridge circuit 101. The phase shift control is to control the switching operations of the switching elements Q1 to Q4 of the full bridge circuit 101 so that the switching timings of the two switching legs of the full bridge circuit 101 are shifted and a phase difference occurs between the switching timings.

In the control of the full bridge circuit 101, the control circuit 12 controls the switching operations of the switching elements Q1 to Q4 so that the switching elements Q1 and Q4 and the switching elements Q2 and Q3 are repeatedly turned ON and OFF alternately at a switching frequency determined according to the graph 22 from the second DC voltage. In this case, in order to prevent both the switching elements from being simultaneously turned ON in the respective switching legs, control is performed so that one of the two switching elements on the same leg is always turned OFF and the other is always turned ON.

In a case where the phase shift control is not performed, the control circuit 12 controls the switching operations of the switching elements Q1 to Q4 so that the switching timings of the switching elements Q1 and Q4 and the switching timings of the switching elements Q2 and Q3 coincide with each other, respectively. On the other hand, in a case where the phase shift control is performed, the control circuit 12 controls the switching operations of the switching elements Q1 to Q4 so that the switching timings of the switching elements Q1 and Q4 and the switching timings of the switching elements Q2 and Q3 shift from each other by the same phase shift amount in the respective combinations.

In a case where the above-described phase shift control is performed, the control circuit 12 changes the phase shift amount according to the magnitude of the second DC voltage. Specifically, as shown in the graph 23, the phase shift amount is adjusted so that the lower the second DC voltage and the further away the second DC voltage is from the threshold Vth1, the larger the phase shift amount. For example, the relationship between the switching frequency and the phase shift amount determined according to the second DC voltage can be set in advance in the control circuit 12 by a function, a table, or the like, and used to adjust the phase shift amount according to the graph 23. The phase shift amount may be adjusted based not on the switching frequency, but on the output voltage (second DC voltage), output power, or the like of the DC-DC converter 10.

As shown in the graph 22, in a case where the switching frequency reaches a predetermined upper limit frequency in the frequency modulation mode, the control circuit 12 performs the phase shift control to change the phase shift amount in a state in which the switching frequency is fixed to the upper limit frequency. Therefore, even in a case where the switching frequency has an upper limit, the output voltage (second DC voltage) of the DC-DC converter 10 can be controlled by a change in the phase shift amount.

### - Phase Shift -

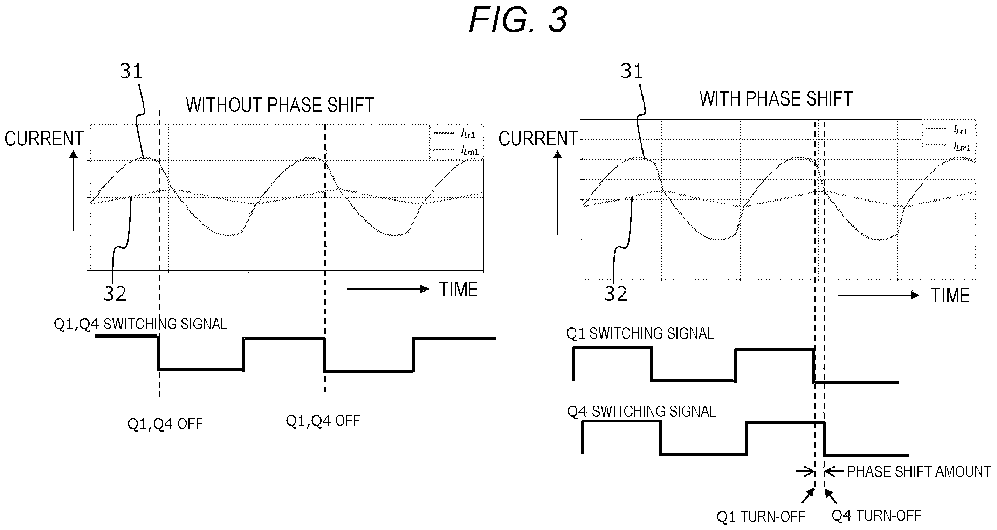

FIG. 3 is a diagram illustrating an effect of the phase shift control. In FIG. 3, a graph 31 represents a current flowing through the resonance reactor Lr1, and a graph 32 represents a current flowing through the exciting inductance Lm1. In a case where the phase shift control is not performed, as shown in the left diagram in FIG. 3, a switching signal for the switching element Q1 and a switching signal for the switching element Q4 repeat ON and OFF at the same timing. On the other hand, in a case where the phase shift control is performed, as shown in the right diagram in FIG. 3, a switching signal for the switching element Q1 and a switching signal for the switching element Q4 repeat ON and OFF at timings shifted from each other by the phase shift amount, respectively. In this case, the phase shift amount is determined so that, when the switching element on the delay side (switching element Q4 in FIG. 3) is turned off, the current value of the resonance reactor Lr1 shown in the graph 31 and the current value of the exciting inductance Lm1 shown in the graph 32 overlap each other. Therefore, the breaking current in the switching element on the delay side can be greatly reduced compared to the case where no phase shift control is performed. Therefore, it is possible to reduce the loss occurring due to the switching operation of the full bridge circuit 101.

As described above, by performing the phase shift control, the loss occurring due to the switching operation of the full bridge circuit 101 can be reduced, and the DC-DC converter 10 can be operated with high efficiency. The above-described phase shift amount corresponds to the phase shift amount adjusted according to the graph 23 of FIG. 2, and this can be realized by using a function, a table, or the like set in advance in the control circuit 12 as described above.

According to the above-described first embodiment of the present invention, the following actions and effects are achieved.

(1) A power supply device 1 includes a resonance type DC-DC converter 10 that performs voltage conversion between a first DC voltage and a second DC voltage, and a control circuit 12 that controls the DC-DC converter 10. The DC-DC converter 10 has a full bridge circuit 101 that is a switching circuit and a resonance circuit 102. In a case where a second DC voltage is higher than a predetermined threshold Vth1 and the second DC voltage is lower than a predetermined threshold Vth2 that is larger than the threshold Vth1, the control circuit 12 controls the DC-DC converter 10 in a resonance frequency mode in which a switching frequency of the full bridge circuit 101 is maintained close to a resonance frequency of the resonance circuit 102. In addition, in a case where the second DC voltage is lower than the threshold Vth1 or the second DC voltage is higher than the threshold Vth2, the control circuit 12 controls the DC-DC converter 10 in a frequency modulation mode in which the switching frequency is changed with a change in the second DC voltage. Accordingly, it is possible to realize a power supply device 1 capable of achieving both a wide input/output voltage range and loss reduction.
(2) The power supply device 1 further includes an AC-DC converter 14 that converts an AC voltage to the first DC voltage. In the resonance frequency mode, the control circuit 12 controls the AC-DC converter 14 so that the first DC voltage is increased with an increase in the second DC voltage according to the graph 21 of FIG. 2. Accordingly, it is possible to realize a wide input/output voltage range in the power supply device 1 that supplies DC power from AC power.
(3) The switching circuit includes a full bridge circuit 101 connected to the first DC voltage and having two switching legs. In a case where the switching frequency is higher than the resonance frequency in the frequency modulation mode, the control circuit 12 executes phase shift control for the switching circuit so that a phase difference occurs between a switching timing of one switching leg and a switching timing of the other switching leg. Accordingly, it is possible to reduce the loss occurring due to the switching operation of the full bridge circuit 101.
(4) In a case where the switching frequency reaches a predetermined upper limit frequency in the frequency modulation mode, the control circuit 12 performs the phase shift control in a state in which the switching frequency is fixed to the upper limit frequency. Accordingly, even in a case where the switching frequency has an upper limit due to the characteristics or the like of the switching element, the output voltage of the DC-DC converter 10 can be controlled by a change in the phase shift amount.
(5) In power supply from the first DC voltage to the second DC voltage, the control circuit 12 controls, in a case where the second DC voltage is lower than the threshold Vth1, the DC-DC converter 10 so that the switching frequency that is higher than the resonance frequency changes toward the resonance frequency, with an increase in the second DC voltage. In addition, in a case where the second DC voltage is higher than the threshold Vth2, the control circuit 12 controls the DC-DC converter 10 so that the switching frequency that is lower than the resonance frequency changes away from the resonance frequency, with an increase in the second DC voltage. Accordingly, in the power supply device 1 that supplies power from the first DC voltage to the second DC voltage to charge the load such as a secondary battery, it is possible to appropriately control the DC-DC converter 10 according to the voltage fluctuations of the load.

### - Second Embodiment -

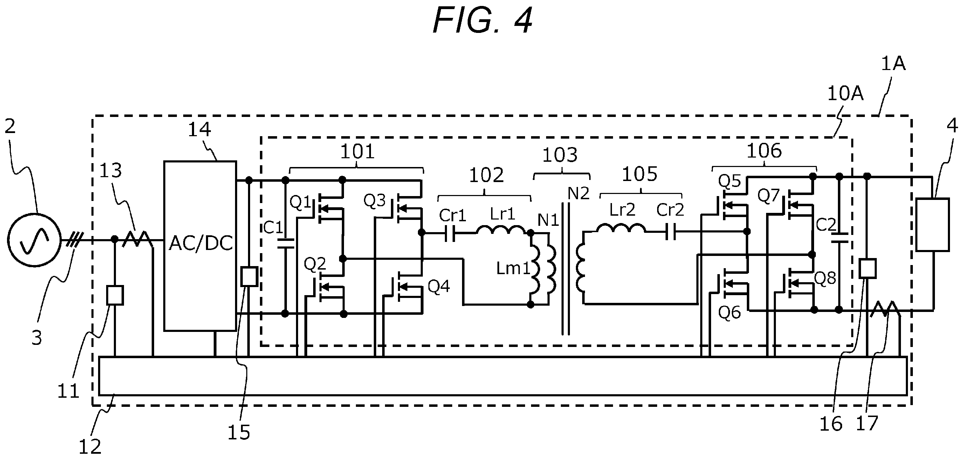

FIG. 4 is a diagram showing a configuration of a power supply device according to a second embodiment of the present invention. A power supply device 1A shown in FIG. 4 differs from the power supply device 1 of FIG. 1 described in the first embodiment in that a bidirectional DC-DC converter 10A is provided instead of the DC-DC converter 10. The DC-DC converter 10A has a secondary side resonance circuit 105 and a secondary side full bridge circuit 106 instead of the rectifier circuit 104. Hereinafter, the power supply device 1A of the present embodiment will be described focusing on differences from the first embodiment.

As in the full bridge circuit 101, the secondary side full bridge circuit 106 has two switching legs in which switching elements Q5 and Q6 are connected in series and switching elements Q7 and Q8 are connected in series. In these switching legs, each of the switching elements Q5 to Q8 performs a switching operation at a predetermined timing according to the control of the control circuit 12, whereby the DC voltage applied from the load 4 is converted to the AC voltage and output to the secondary side resonance circuit 105. As the switching elements Q5 to Q8, for example, semiconductor elements such as MOSFETs and IGBTs are used.

The secondary side resonance circuit 105 is connected between the secondary side full bridge circuit 106 and the insulation transformer 103, and has a predetermined resonance frequency determined according to the capacitance value of a resonance capacitor Cr2 and the inductance value of a resonance reactor Lr2.

In the present embodiment, the insulation transformer 103 performs voltage conversion from the secondary winding wire N2 to the primary winding wire N1, in addition to the voltage conversion from the primary winding wire N1 to the secondary winding wire N2 described in the first embodiment. That is, the insulation transformer 103 subjects the AC voltage input from the secondary side full bridge circuit 106 to the secondary winding wire N2 via the secondary side resonance circuit 105 to voltage conversion to another AC voltage at a voltage ratio according to a turn ratio of the primary winding wire N1 to the secondary winding wire N2, and outputs the AC voltage to the full bridge circuit 101 via the resonance circuit 102.

The full bridge circuit 101 generates a DC voltage by rectifying the AC voltage output to the primary winding wire N1 side of the insulation transformer 103, and outputs the DC voltage to the AC-DC converter 14. In the present embodiment, the AC-DC converter 14 can perform an inverter operation, converts a DC voltage generated by the full bridge circuit 101 to a predetermined AC voltage, and outputs the AC voltage to the AC power supply 2 side. Therefore, it is possible to realize a power supply device 1A as a bidirectional charger capable of supplying power from the AC power supply 2 to the load 4 and also supplying power from the load 4 to the AC power supply 2 using the load 4 as a DC power supply.

The control circuit 12 controls the switching operation of the full bridge circuit 101 or the secondary side full bridge circuit 106 according to the feeding direction of the power supply device 1A. That is, when power is supplied from the AC power supply 2 to the load 4, as described in the first embodiment, the switching elements Q1 to Q4 of the full bridge circuit 101 are controlled based on the sensor signals transmitted from the voltage sensor 11, the current sensor 13, the voltage sensor 15, the voltage sensor 16, and the current sensor 17. Meanwhile, when power is supplied from the load 4 to the AC power supply 2, the switching elements Q5 to Q8 of the secondary side full bridge circuit 106 are controlled based on the sensor signals transmitted from these sensors.

### - Operation of Second Embodiment -

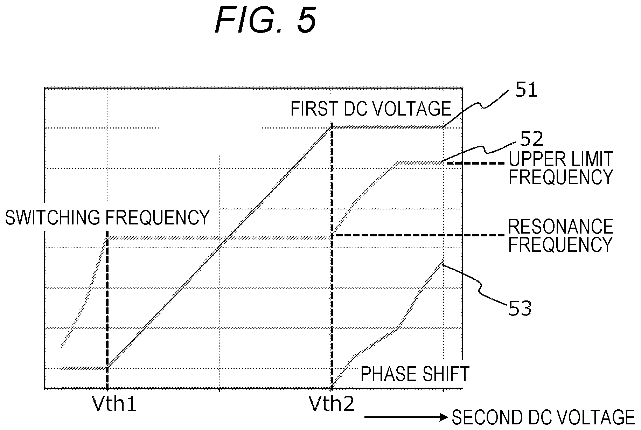

FIG. 5 is a diagram showing an operation of the power supply device according to the second embodiment of the present invention. FIG. 5 shows an operation example in a case where power is supplied from the load 4 to the AC power supply 2 in the power supply device 1A of FIG. 4. Hereinafter, an operation example in a case where the load 4 is a secondary battery and the power supply device 1A supplies power to the AC power supply 2 using the power of the load 4 will be described with reference to FIG. 5. An operation in a case where the load 4 is charged using the power of the AC power supply 2 is the same as that in FIG. 2 described in the first embodiment, and thus the description thereof will be omitted below.

In FIG. 5, a graph 51 represents an input voltage (first DC voltage) of the AC-DC converter 14, a graph 52 represents a switching frequency of the secondary side full bridge circuit 106 in the DC-DC converter 10A, and a graph 53 represents a change in the phase shift amount of the secondary side full bridge circuit 106. In these graphs 51 to 53, the horizontal axis represents the magnitude of the input voltage (second DC voltage) from the load 4 to the DC-DC converter 10A, and the vertical axis represents the magnitude of the physical amount (first DC voltage, switching frequency, and phase shift amount) corresponding to each graph.

First, the control circuit 12 sets a function corresponding to the graph 51 as a DC voltage command value for the DC-DC converter 10A. This function represents a relationship between the first DC voltage and the second DC voltage. Then, based on the set DC voltage command value and the DC voltages (first and second DC voltages) detected by the voltage sensors 15 and 16, respectively, the control circuit 12 sets the switching frequency of the secondary side full bridge circuit 106, and controls the switching elements Q5 to Q8 according to the switching frequency. Therefore, the control circuit 12 can control the secondary side full bridge circuit 106 according to the graphs 51 and 52 to change the switching frequency.

The control circuit 12 compares the value of the second DC voltage detected by the voltage sensor 16 with preset thresholds Vth1 and Vth2 (Vth1<Vth2), and changes the switching frequency as shown in the graph 52 of FIG. 5 according to the comparison result. That is, in a case where the second DC voltage is higher than the threshold Vth1 and the second DC voltage is lower than the threshold Vth2, the DC-DC converter 10A is set in the resonance frequency mode, and the secondary side full bridge circuit 106 in the DC-DC converter 10A is controlled so that the switching frequency is maintained close to the resonance frequency of the secondary side resonance circuit 105.

Meanwhile, in a case where the second DC voltage is higher than the threshold Vth2 or the second DC voltage is lower than the threshold Vth1, the DC-DC converter 10A is set in the frequency modulation mode, and the secondary side full bridge circuit 106 in the DC-DC converter 10A is controlled so that the switching frequency is changed with a change in the second DC voltage. Specifically, in a case where the second DC voltage is higher than the threshold Vth2, the secondary side full bridge circuit 106 is controlled in the DC-DC converter 10A so that the switching frequency that is higher than the resonance frequency changes toward the resonance frequency with a decrease in the second DC voltage. In addition, in a case where the second DC voltage is lower than the threshold Vth1, the secondary side full bridge circuit 106 is controlled in the DC-DC converter 10A so that the switching frequency that is lower than the resonance frequency changes away from the resonance frequency with a decrease in the second DC voltage.

In the power supply device 1A of the present embodiment, by the control performed as described above, while the DC-DC converter 10A performs not only the voltage conversion from the first DC voltage to the second DC voltage but also the voltage conversion from the second DC voltage to the first DC voltage in a wide input/output voltage range, loss reduction can be achieved using the resonance frequency mode in a possible voltage range. Therefore, it is possible to achieve both a wide input/output voltage range and loss reduction.

In a case where the switching frequency of the secondary side full bridge circuit 106 is higher than the resonance frequency, that is, in a case where the second DC voltage is higher than the threshold Vth2, the control circuit 12 performs the phase shift control on the secondary side full bridge circuit 106. That is, the switching operations of the switching elements Q5 to Q8 of the secondary side full bridge circuit 106 are controlled so that the switching timings of the two switching legs of the secondary side full bridge circuit 106 are shifted and a phase difference occurs between the switching timings.

In the control of the secondary side full bridge circuit 106, the control circuit 12 controls the switching operations of the switching elements Q5 to Q8 so that the switching elements Q5 and Q8 and the switching elements Q6 and Q7 are repeatedly turned ON and OFF alternately at a switching frequency determined according to the graph 52 from the second DC voltage. In this case, in order to prevent both the switching elements from being simultaneously turned ON in the respective switching legs, control is performed so that one of the two switching elements on the same leg is always turned OFF and the other is always turned ON.

In a case where the phase shift control is not performed, the control circuit 12 controls the switching operations of the switching elements Q5 to Q8 so that the switching timings of the switching elements Q5 and Q8 and the switching timings of the switching elements Q6 and Q7 coincide with each other, respectively. On the other hand, in a case where the phase shift control is performed, the control circuit 12 controls the switching operations of the switching elements Q5 to Q8 so that the switching timings of the switching elements Q5 and Q8 and the switching timings of the switching elements Q6 and Q7 shift from each other by the same phase shift amount in the respective combinations.

In a case where the above-described phase shift control is performed, the control circuit 12 changes the phase shift amount according to the magnitude of the second DC voltage as in the first embodiment. Specifically, as shown in the graph 53, the phase shift amount is adjusted so that the higher the second DC voltage and the further away the second DC voltage is from the threshold Vth2, the larger the phase shift amount. For example, the relationship between the switching frequency and the phase shift amount determined according to the second DC voltage can be set in advance in the control circuit 12 by a function, a table, or the like, and used to adjust the phase shift amount according to the graph 53. The phase shift amount may be adjusted based not on the switching frequency, but on the output voltage (first DC voltage), output power, or the like of the DC-DC converter 10A.

According to the second embodiment of the present invention described above, in power supply from the second DC voltage to the first DC voltage, the control circuit 12 controls, in a case where the second DC voltage is higher than the threshold Vth2, the DC-DC converter 10A so that the switching frequency that is higher than the resonance frequency changes toward the resonance frequency with a decrease in the second DC voltage. In addition, in a case where the second DC voltage is lower than the threshold Vth1, the control circuit 12 controls the DC-DC converter 10A so that the switching frequency that is lower than the resonance frequency changes away from the resonance frequency with a decrease in the second DC voltage. Accordingly, in the power supply device 1A that supplies power from the second DC voltage to the first DC voltage to supply power from the DC power supply to the AC power supply, it is possible to appropriately control the DC-DC converter 10A according to the voltage fluctuations of the DC power supply.

### - Third Embodiment -

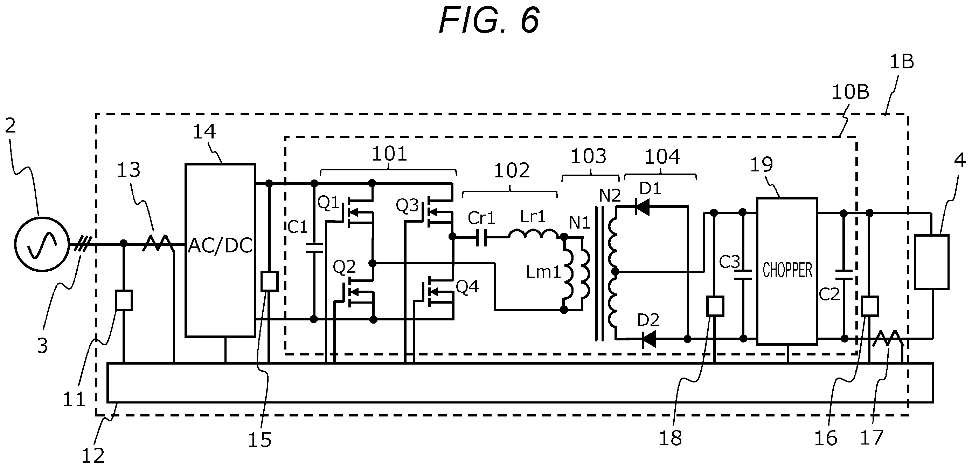

FIG. 6 is a diagram showing a configuration of a power supply device according to a third embodiment of the present invention. A power supply device 1B shown in FIG. 6 differs from the power supply device 1 of FIG. 1 described in the first embodiment in that a DC-DC converter 10B is provided instead of the DC-DC converter 10. The DC-DC converter 10B further has a voltage sensor 18, a capacitor C3, and a chopper 19, which are inserted between the rectifier circuit 104 and the load 4. Hereinafter, the power supply device 1B of the present embodiment will be described focusing on differences from the first embodiment.

The chopper 19 converts a DC voltage (hereinafter, referred to as "third DC voltage" in the present embodiment) generated by the rectifier circuit 104 and smoothed by the capacitor C3 to a second DC voltage that is an output voltage to the load 4, and outputs the second DC voltage to the load 4. That is, in the present embodiment, the third DC voltage is converted to the second DC voltage by the chopper 19 provided between the rectifier circuit 104 and the second DC voltage, and is output to the load 4. The voltage sensor 18 detects the magnitude of the third DC voltage, and transmits a sensor signal corresponding to the detection result to the control circuit 12.

In the present embodiment, in the resonance frequency mode, the control circuit 12 performs control of the chopper 19 in addition to the control of the AC-DC converter 14 and the switching elements Q1 to Q4 described in the first embodiment. Specifically, based on the sensor signals transmitted from the voltage sensors 15 and 18, respectively, the chopper 19 is controlled so that the ratio of the input voltage (third DC voltage) of the chopper 19 to the first DC voltage becomes constant. Therefore, the DC-DC converter 10B can be operated while the switching frequency is fixed to the resonance frequency.

According to the third embodiment of the present invention described above, the DC-DC converter 10B has the insulation transformer 103 that converts the AC voltage generated by the switching circuit based on the first DC voltage to another AC voltage at a predetermined voltage ratio, the rectifier circuit 104 that rectifies the AC voltage generated by the voltage conversion of the insulation transformer 103 to generate the third DC voltage, and the chopper 19 that is provided between the rectifier circuit 104 and the second DC voltage and converts the third DC voltage to the second DC voltage. In the resonance frequency mode, the control circuit 12 controls the chopper 19 so that a ratio of the third DC voltage to the first DC voltage becomes constant. Accordingly, the resonance frequency mode can be applied in a wide voltage range, and high efficiency can be achieved.

The present invention is not limited to the above embodiments, and includes various modification examples. For example, in order to describe the present invention in an easy-to-understand manner, the respective embodiments are described in detail, and are not necessarily limited to those including all the configurations described above. In addition, a part of a configuration of an embodiment can be replaced with a configuration of another embodiment, and to a configuration of an embodiment, a configuration of another embodiment can be added. In addition, it is possible to add, delete, or replace a configuration for a part of the configuration of each embodiment. In addition, some or all of the above-described configurations, functions, processing units, processing means, and the like may be realized by hardware, for example, by designing them as an integrated circuit. In addition, the above-described configurations, functions, and the like may be realized by software by a processor interpreting and executing programs for realizing the functions. Information such as a program, a table, a file, or the like for realizing each function can be stored in a recording device such as a memory, a hard disk, or a solid state drive (SSD), or a recording medium such as an IC card, an SD card, or a DVD.

The present invention is not limited to the above-described embodiments, and various modifications can be made without departing from the gist of the present invention.

### Reference Signs List

- 1, 1A, 1B: power supply device
- 2: AC power supply
- 3: power supply line
- 4: load
- 10, 10A, 10B: DC-DC converter
- 11: voltage sensor
- 12: control circuit
- 13: current sensor
- 14: AC-DC converter
- 15: voltage sensor
- 16: voltage sensor
- 17: current sensor
- 18: voltage sensor
- 19: chopper
- 101: full bridge circuit
- 102: resonance circuit
- 103: insulation transformer
- 104: rectifier circuit
- 105: secondary side resonance circuit
- 106: secondary side full bridge circuit

## Claims

1. A power supply device comprising:
a resonance type DC-DC converter that performs voltage conversion between a first DC voltage and a second DC voltage; and a control circuit that controls the DC-DC converter,
wherein
the DC-DC converter has a switching circuit and a resonance circuit,
in a case where the second DC voltage is higher than a predetermined first threshold and the second DC voltage is lower than a predetermined second threshold that is larger than the first threshold, the control circuit controls the DC-DC converter in a resonance frequency mode in which a switching frequency of the switching circuit is maintained close to a resonance frequency of the resonance circuit, and
in a case where the second DC voltage is lower than the first threshold or the second DC voltage is higher than the second threshold, the control circuit controls the DC-DC converter in a frequency modulation mode in which the switching frequency is changed with a change in the second DC voltage.

2. The power supply device according to claim 1, further comprising
an AC-DC converter that converts an AC voltage to the first DC voltage,
wherein, in the resonance frequency mode, the control circuit controls the AC-DC converter so that the first DC voltage is increased with an increase in the second DC voltage.

3. The power supply device according to claim 1,
wherein the DC-DC converter has a transformer that converts an AC voltage generated by the switching circuit based on the first DC voltage to another AC voltage at a predetermined voltage ratio, a rectifier circuit that rectifies the another AC voltage to generate a third DC voltage, and a chopper that is provided between the rectifier circuit and the second DC voltage and converts the third DC voltage to the second DC voltage, and
in the resonance frequency mode, the control circuit controls the chopper so that a ratio of the third DC voltage to the first DC voltage becomes constant.

4. The power supply device according to claim 1, wherein
the switching circuit includes a full bridge circuit connected to the first DC voltage and having a first switching leg and a second switching leg, and
in a case where the switching frequency is higher than the resonance frequency in the frequency modulation mode, the control circuit executes phase shift control for the switching circuit so that a phase difference occurs between a switching timing of the first switching leg and a switching timing of the second switching leg.

5. The power supply device according to claim 4,
wherein, in a case where the switching frequency reaches a predetermined upper limit frequency in the frequency modulation mode, the control circuit performs the phase shift control in a state in which the switching frequency is fixed to the upper limit frequency.

6. The power supply device according to claim 1,
wherein, in power supply from the first DC voltage to the second DC voltage, the control circuit
controls, in a case where the second DC voltage is lower than the first threshold, the DC-DC converter so that the switching frequency that is higher than the resonance frequency changes toward the resonance frequency, with an increase in the second DC voltage, and
controls, in a case where the second DC voltage is higher than the second threshold, the DC-DC converter so that the switching frequency that is lower than the resonance frequency changes away from the resonance frequency, with an increase in the second DC voltage.

7. The power supply device according to claim 1,
wherein, in power supply from the second DC voltage to the first DC voltage, the control circuit
controls, in a case where the second DC voltage is higher than the second threshold, the DC-DC converter so that the switching frequency that is higher than the resonance frequency changes toward the resonance frequency with a decrease in the second DC voltage, and
controls, in a case where the second DC voltage is lower than the first threshold, the DC-DC converter so that the switching frequency that is lower than the resonance frequency changes away from the resonance frequency with a decrease in the second DC voltage.
